# EUROPEAN PATENT APPLICATION

(11) **EP 2 699 015 A1**
(43) Date of publication of application: **19.02.2014**
(21) Application number: 12007424.0
(22) Date of filing: 30.10.2012
(51) Int. Cl.: H04N 21/47, H04N 21/422, H04N 21/439, H04N 21/45, H04N 21/466, G10L 15/22, G06F 3/01

(54) **Television device and method for displaying virtual on-screen interactive moderator**

(30) Priority: 14.08.2012 TW 101129302
(71) Applicant: Kentec Inc., 115 Taipei City (TW)
(72) Inventor: Sung, Liam-Yung, 115 Taipei City (TW)
(74) Representative: Ter Meer Steinmeister & Partner

(57) **Abstract**

A television device (10) and the method for displaying a virtual on-screen interactive moderator (3) are disclosed. The television device (10) generates a virtual character to displayed on a display screen (2) connected to the television device (10) to be a virtual on-screen interactive moderator (3) of the television device (10) which is in a viewable, visual form and interacts with the user (4) of the television device (10). The virtual on-screen interactive moderator (3) acts as an intermediating proxy agent between the user (4) and the television device (10) for activating and executing the commands of the television device user (4), or proactively offers related reference information and advices, which helps the user (4) to connect to the desired TV channels, web pages, functions, or activating applications on the television device (10). Accordingly, the user (4) has a whole new experience by interacting with the virtual on-screen interactive moderator (3).

## Description

### BACKGROUND OF THE INVENTION

### Field of the Invention

The present invention relates to a television device, in particular to a television device which generates and displays a virtual on-screen interactive moderator. The virtual on-screen interactive moderator performs guiding interactive dialogue with the user to help the user making the command or decisions, or selecting desired functions of the television device.

### Description of Prior Art

In general public living practices these days, people spend excessive amounts of time sitting on the couch or at somewhere inside the living room watching television or other handy portable gadgets, which is to entertain themselves and joy this session of relaxation, or obtain information of latest happenings both locally and worldwide, or other form of non-work beat related activities at any possible occasion they can get. According to the technologies today, the current interaction between a user and a television is a simple remote control to activate television channels, or on-demand services.

However, since the concept of a smart television is introduced, the service scope provided by a television to user expands rapidly. The television now can provide purely TV channel, news, show, movie, browsing internet web and executing applications etc. Thus, it provides user with abundance of choices of variety of entertainments, services and information, etc. Though smart television is a known concept today, most user still loom in a forest of miseries to figure out how to use smart television and paring remotes because of the complexity of smart television.

In terms of the limitations, under serious investigation of the applicants, a more intuitional television is provided.

### SUMMARY OF THE INVENTION

The objective of the present invention is to provide a television device and method for displaying a virtual on-screen interactive moderator. A substantial and visible virtual on-screen interactive moderator is displayed on the display screen of the television device, the virtual on-screen interactive moderator performs guiding interaction dialogue with a user for guiding the user to operate the television device at ease and brings a whole new interaction experiences to the user.

In order to achieve the above, television device generates and creates a substantial virtual character to display on a display screen internal installed or external connected to television device. The virtual character acts as a virtual on-screen interactive moderator on the television device in a viewable, visual form, and interacts with the user of the television device. The virtual on-screen interactive moderator is an intermediating proxy agent between the user and the television device for activating and executing command of the user, or proactively offers related advices for the user, which helps the user to connect to the desired TV channels, web pages, functions, or activating applications on the television device.

Generally speaking, a user operates according to his/her decisions on a traditional or smart television such as which channel to watch or which web site to browse. The present invention provides advantages by bringing whole new visual and operation experience to user via the guidance from the virtual on-screen interactive moderator. The virtual on-screen interactive moderator leads conversations with the user according to the voice commands input by the user and provides advices or information to the user to help and guide the user when selecting functions.

Further, the virtual on-screen interactive moderator is displayed on the display screen in a viewable, visual form. The virtual on-screen interactive moderator opens dialogue with the user whenever the television turns on, just like friends chats with each other when they meet. Whereas, the virtual on-screen interactive moderator interact with user on an amity mood, that brought in a casual and friendly atmosphere between the virtual on-screen interactive moderator and the user. The virtual on-screen interactive moderator carries all choices of desirable decision made by the user that tackles and performs functioning like user's steward.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is schematic diagram of a preferred embodiment according to the present invention;
Fig. 2 is a block diagram of a television device of a preferred embodiment according to the present invention;
Fig. 3 is an operation flow chart of a preferred embodiment according to the present invention; and
Fig. 4 is another operation flow chart of a preferred embodiment according to the present invention.

### DETAILED DESCRIPTION OF THE INVENTION

Embodiments are provided in the following in order to further detail the implementations of the present invention in the summary. It should be noted that objects used in the diagrams of the embodiments are provided with proportions, dimensions, deformations, displacements and details are examples and the present invention is not limited thereto and identical components in the embodiments are the given same component numbers.

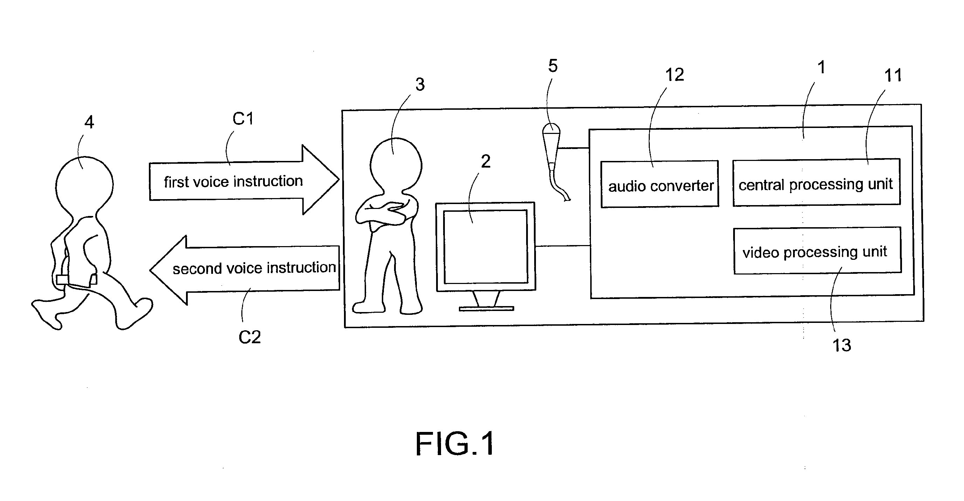

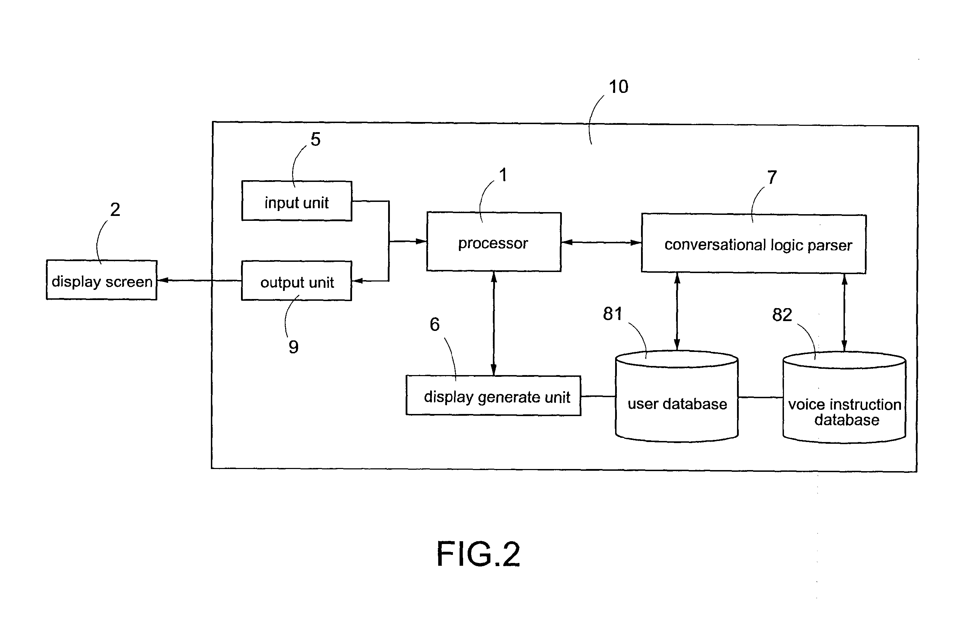

Fig. 1 is schematic diagram of a preferred embodiment according to the present invention. The present invention discloses a television device (the television device 10 shown in Fig. 2). The television device 10 has a processor 1 for processing audio signal and video signals. In the present embodiment, the television device 10 can be an embedded system. In other words, the processor 1 executes all functions provided in the television device 10, and directly generates a virtual on-screen interactive moderator 3 of the present invention.

The television device 10 is installed with a display screen 2, or can be a set up box connecting to the display screen 2 via a cable or wireless connecting to the display screen 2. In the present embodiment, the virtual on-screen interactive moderator 3 is generated by the television device 10 or the embedded system. When the television device 10 is powered on, the virtual on-screen interactive moderator 3 is generated and displayed on the display screen 2 in a viewable, visual form. Specifically, the television device 10 generates a virtual character via a display generate unit (the display generate unit 6 shown in Fig. 2) to act as the virtual on-screen interactive moderator 3 mentioned above. The virtual on-screen interactive moderator 3 interacts with the user 4 on a bidirectional interaction via methods such as talking, gestures, guidance or singing, for guiding the user 4 when selecting multiple services provided by the television device 10, such as selecting TV channels, news, show, movies, applications or other related services.

In present embodiment, the television device 10 is a general television, or a consumer gadget type electronic device such as a smart phone or a tablet, or an intellectual electronic device installed with operating system (OS) with or without a display screen. In the following description, a set up box connected with the external display screen 2 is used as an example.

The processor 1 is composed of a central processing unit (CPU) 11, an audio converter 12 and a video processing unit (VPU) 13. The audio converter 12 is connected with an input unit 5. The input unit 5 receives the voice command input by the user 4. The audio converter 12 performing the analogue/digital converting operation and provides the converted audio signals to the CPU 11. The VPU 13 is used for processing video signals such as television channels, movies and the virtual on-screen interactive moderator 3 to display on the display screen 2 for the user 4 to watch.

In the present embodiment, the input unit 5 is, for example, a microphone, the television device 10 receives the voice command input by the user 4 via the input unit 5. In other embodiments, the input unit 5 is a mouse or a motion sensing device. With the input unit 5, the television device 10 can receive gestures or other control actions of the user 4. In other words, the mainly instruction interface between the television device 10 and the user 4 is via the form of voices, but is not limited to.

When the television device 10 is powered on at anytime, the virtual on-screen interactive moderator 3 is generated and acts as an intermediating proxy agent, and is displayed in a viewable, visual form on the display screen 2, so the user 4 can see the virtual on-screen moderator 3 by naked eyes. The user 4 not only controls the television device 10 via the form of voices, but also interacts with the virtual on-screen interactive moderator 3 spontaneously. As shown in Fig. 1, when the user 4 inputs a first voice command C1 via the input unit 5, such as: "switching to channel 100", the television device 10 switches the television channel to channel 100 according to the first voice command C1 of the user 4, additionally, the virtual on-screen interactive moderator 3 sends a first response C2, such as expressing with the form of voices: "OK, switching to channel 100". In addition to expressing the first response C2 with the form of voices for the user 4 to hear, the virtual on-screen interactive moderator 3 further performs corresponding actions such as displaying the action of the virtual on-screen interactive moderator 3 holding a remote control for switching the television channel to bring the visual experience to the user.

Fig. 2 is a block diagram of a television device of a preferred embodiment according to the present invention. As shown in the diagram, the television device 10 comprises the processor 1, the input unit 5, the display generate unit 6, a conversational logic parser 7, a user database 81, a voice command database 82 and an output unit 9. The processor 1 is electrically coupled with the input unit 5, the display generate unit 6 and the output unit 9. The processor 1 executes the conversational logic parser 7, and accesses the user database 81 and the voice command database 82 via the conversational logic parser 7.

The television device 10 receives the voice command from the user 4 via the input unit 5. The voice command under the internal analogue/digital converting operation is then transferred to the conversational logic parser 7. The conversational logic parser 7 analyzes the converted voice command, and concludes the meaning of the voice command. The user database 81 provides user data of the user 4. The voice command database 82 provides the corresponding operations to execute along with the voice command. Upon finishing analyzing the meaning of the voice command, the processor matches the voice command with the user database 81 and the voice command database 82 for determining which corresponding operations to execute at the television device 10, and which responses to send through the virtual on-screen interactive moderator 3.

The display generate unit 6 is controlled by the processor 1, and the display generate unit 6 generates the virtual on-screen interactive moderator 3 upon the television device 10 is powered on. The television device 10 connects to the display screen 2 via the output unit 9; the virtual on-screen interactive moderator 3 is displayed on the display screen 2 through the output unit 9. In some embodiments, the display generate unit 6 retrieves the meaning of the voice command from the conversational logic parser 7, and the virtual on-screen interactive moderator 3 performs inter-matching among the voice command with the user database 81 and the voice command database 82 for understanding the requirements of the user 4 so as to proactively offer related reference information and advices to the user 4 in suitable timing, and guide the user 4 to make selection according to the reference information and advices.

In the present embodiment, the virtual on-screen interactive moderator 3 guides the user to enable and activate any available embedded features and functions of the television device 10. Specifically, the virtual on-screen interactive moderator 3 interacts with the user 4 via two-way linguistic natural recognition voices. Further, if the input unit 5 is a wireless mouse or motion sensing device (such as a gyro remote controller), the user 4 inputs gestures and other control operations via the input unit 5. The gestures or the control operations are for controlling the television device 10, and the television device 10 interacts with the user via the virtual on-screen interactive moderator 3 after being controlled.

In the present embodiment, the virtual on-screen interactive moderator 3 is defined as a virtual character, and displayed in a viewable, visual form on the display screen 2, so the user 4 can see the virtual on-screen interactive moderator 3 by naked eyes. The virtual character can be of any set and sizes formed of a cartoon, a photograph, a picture, a hologram, an animal, a moving object and an animated character, presented in terms of 2D or 3D factor, and is not limited thereto.

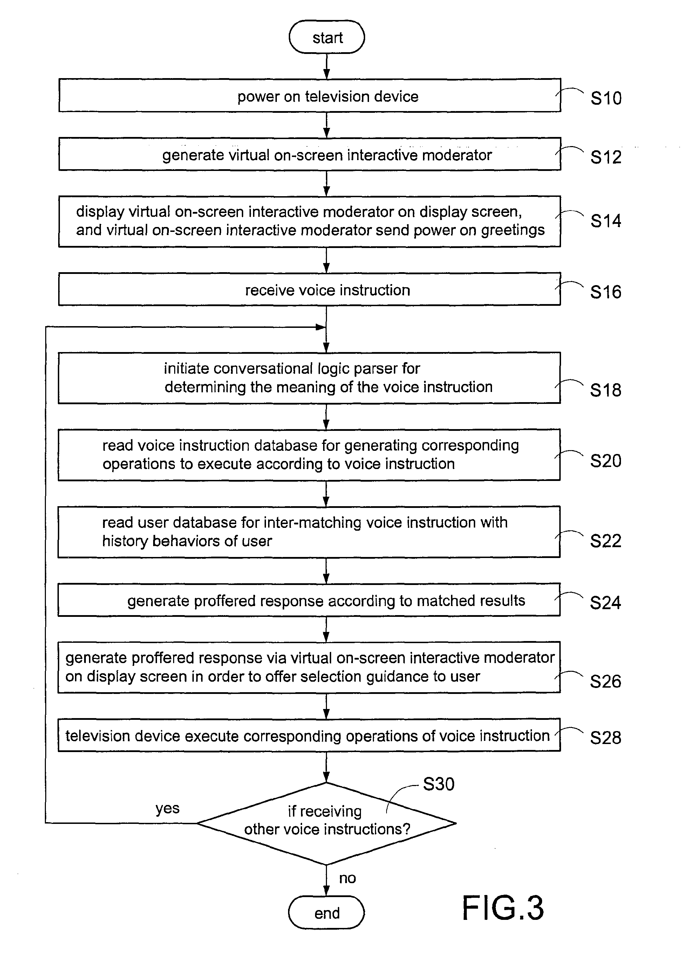

Fig. 3 is an operation flow chart of a preferred embodiment according to the present invention. First, the user 4 powers on the television device 10 (step S10). The television device 10 then generates the virtual on-screen interactive moderator 3 (step S12). Next, the television device 10 displays the virtual on-screen interactive moderator 3 on the display screen 2, and the virtual on-screen interactive moderator 3 send power on greetings (step S14). Specifically, the television device 10 may generates the power on greetings based on the time and user data of the user 4, and then sends the power on greetings through the virtual on-screen interactive moderator 3, for example, the virtual on-screen interactive moderator 3 expresses via the form of voices: "Good evening, Mr. Sung, it is 8 o'clock in the evening.".

Next, the television device 10 receives voice command from the user 4 (step S16). The voice command is transferred to the conversational logic parser 7 for determining the meaning of the voice command (step S18). After determining the meaning of the voice command, the television device 10 matches the voice command database 82, for determining which corresponding operations to execute according to the voice command (step S20). For example, if the meaning of the voice command is: "Feeling hungry.", the television device 10 executes the action to recommend restaurant information following matching the voice command database 82. If the meaning of the voice command is: "Feeling bored." the television device 10 executes the action to recommend television programs or movies following matching the voice command database 82. It should be noted that, the virtual on-screen interactive moderator 3 acts as an intermediating interactive interface, thus, the user 4 feels like that under the using scenario, the above recommending actions are performed by the virtual on-screen interactive moderator 3.

The television device 10 simultaneously accesses the user database 81 for inter-matching the voice command with the history behaviors of the user 4 (step S22). A preferred response is generated according to the inter-matched results (step S24). For example, after the television device 10 receives the corresponding operations of the voice command, the recommendation which the user 4 does not like or rejects in the history are deleted according to the inter-matching results of the user database 81.

Lastly, the television device 10 send the preferred response on the display screen 2 via the virtual on-screen interactive moderator 3 in order to offer selection guidance to the user 4 (step S26). The television device 10 executes the corresponding operations of the voice command (step S28). When the virtual on-screen interactive moderator 3 sends the preferred responses, and the television device 10 also executes the corresponding operations, the step moves to determine if receiving other voice commands (step S30). If the television device 10 receives other voice commands, the step moves back to the flow from the step S18 to the step S28. As mentioned above, because the virtual on-screen interactive moderator 3 acts as an intermediating character between the television device 10 and the user 4, the user 4 personally experiences that the virtual on-screen interactive moderator 3 activates and executes the commands of the user 4, and proactively offers related reference information and advices according to the commands of the user 4 in the television device 10.

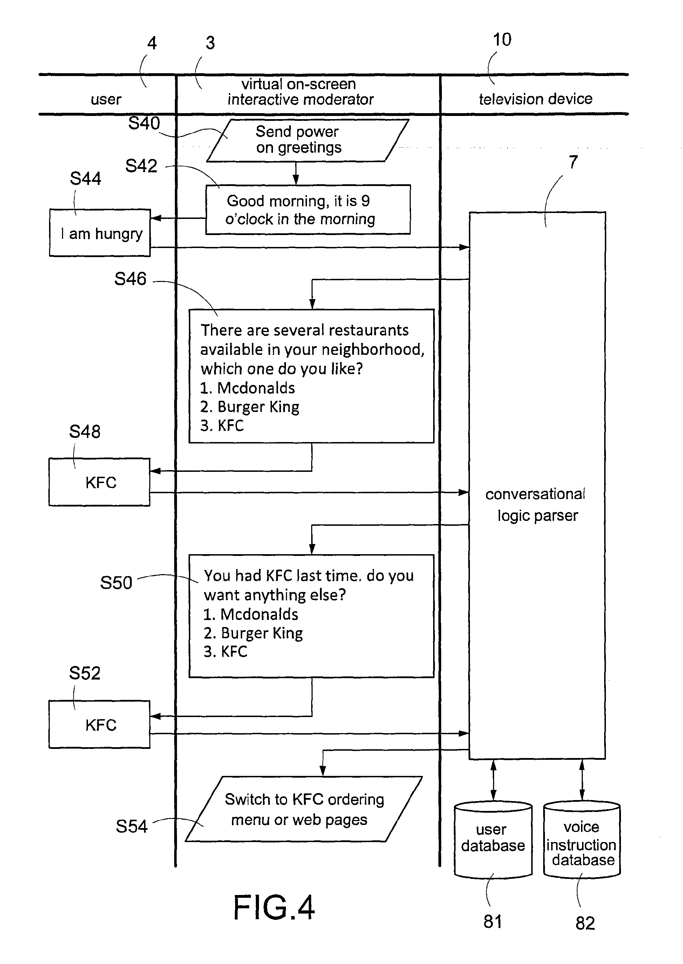

Fig. 4 is another operation flow chart of a preferred embodiment according to the present invention. In the example demonstrated in Fig. 4, when the television device 10 is powered on, the virtual on-screen interactive moderator 3 sends the power on greetings (step S40). As shown in Fig. 4, the virtual on-screen interactive moderator 3 expresses via form of voices: "Good morning, it is 9 o'clock in the morning" (step S42). When the user 4 wants to interact with the virtual on-screen interactive moderator 3, the user 4 inputs the voice command via the input unit 5, such as: "I am hungry" (step S44). The voice command is transferred to the conversational logic parser 7 for determining the meaning of the voice command. After matching the user database 81 and the voice command database 82, the preferred response is generated, for example the virtual on-screen interactive moderator 3 sends the preferred respond via the form of voices: "I have found the food stores near by your house. Which one do you like it? 1. McDonalds; 2. Burger King; 3. KFC.".

When the user 4 receives preferred response from the virtual on-screen interactive moderator 3, the user 4 can then input other voice commands, such as: "KFC" (step S48). The voice command is parsed by the above mentioned conversational logic parser 7, and the virtual on-screen interactive moderator 3 sends another preferred response via the form of voices according to the scenarios, such as: "You ate the KFC last time. Would you like to choice another one? 1. McDonalds; 2. Burger King; 3. KFC." (step S50). Meanwhile, if the user 4 inputs the voice command, such as: "KFC" (step S52), the television device 10 can understand that the user 4 really wants to eat KFC after the voice command is analyzed. Accordingly, the television device 10 executes corresponding operations, such as switching to the KFC ordering menu or web pages, and displayed on the display screen 2 (step S54). At the same time, the virtual on-screen interactive moderator 3 and the user 4 keep on interacting, for example, the virtual on-screen interactive moderator 3 recommends KFC meals via the form of voices for the user 4 for helping the user 4 to make a decision of selection of what to eat.

In the present embodiment, the virtual on-screen interactive moderator 3 is an intermediating interface which is visible by the naked eyes and carrying vocal linguistic interactive function. The user 4 is under a passive status, performs two way interaction and communication with the virtual on-screen interactive moderator 3, and follows the guidance of the virtual on-screen interactive moderator 3 to make a decision or selection. To the user 4, the virtual on-screen interactive moderator 3 intermediates between the user 4 and the television device 10, used for receiving the voice command input by the user 4, and triggering the television device 10 to execute corresponding operations. These operations can be determined upon the guiding tutor present to user from the virtual on-screen interactive moderator 3 (for example step S46 and S50).

In recent years, the internet usage increases rapidly, the television device migrates from one way receiving broadcasted television channels to include multiple functions such as providing purely TV channel, news, shows, movie, and browsing the internet. As the complication in operating a television device increases, the present invention provides a more relaxing method to use the television device 10. The user only needs to follow the conversational guiding tutor present from the virtual on-screen interactive moderator 3 for controlling the television device 10 via voice command.

## Claims

1. A television device (10) connected to a display screen (2), the television device (10) comprising:
a processor (1), executing a conversational logic parser (7);
an input unit (5), electrically coupled with the processor (1), receiving a voice command to transfer to the processor (1), wherein meaning of the voice command is analyzed by the conversational logic parser (7);
a display generate unit (6), electrically coupled with the processor (1), and controlled by the processor (1) to generate a virtual on-screen interactive moderator (3);
a user database (81), connected to the processor (1), for providing user data ;
a voice command database (82), connected to the processor (1), for providing corresponding operations to execute according to the received voice command; and
an output unit (9), electrically coupled with the processor (1), the television device (10) connected to the display screen (2) via the output unit (9) for displaying the virtual on-screen interactive moderator (3) on the display screen (2), wherein the virtual on-screen interactive moderator (3) is displayed in a viewable, visual form;
wherein, upon the processor (1) analyzed the meaning of the voice command, the voice command, the user database (81) and the voice command database (82) are matched for determining which corresponding operations to execute by the television device (10), and generating a preferred response to send by the virtual on-screen interactive moderator (3), wherein the virtual on-screen interactive moderator (3) sends the preferred response via form of voices and simultaneously performs a visible corresponding action.

2. The television device of claim 1, wherein the user database (81) records history behaviors of the user (4), the preferred response sent by the virtual on-screen interactive moderator (3) excludes dislike or rejected options in the history according to the history behaviors of the user (4).

3. The television device of claim 1, wherein the virtual on-screen interactive moderator (3) is selected from the group consisting of a cartoon, a photograph, a picture, a hologram, an animal, a moving object and an animated character.

4. The television device of claim 3, wherein the virtual on-screen interactive moderator (3) is presented on the display screen (2) in terms of 2D or 3D factor.

5. The television device of claim 1, wherein the processor (1) comprises:
an audio converter (12), receiving the voice command from the input unit (5), and performing an analogue/digital converting operation on the voice command;
a central processing unit (11), electrically coupled with the audio converter (12), receiving and processing the converted voice command; and
a video processing unit (13), electrically coupled with the central processing unit (11), for processing video signals of the television device (10) and outputting via the output unit (9) to display on the display screen (2).

6. A method for displaying a virtual on-screen interactive moderator (3) on a television device (10), the television device (10) connected to a display screen (2), the method for displaying a virtual on-screen interactive moderator (3) comprising:
a) powering on the television device (10);
b) generating a virtual on-screen interactive moderator (3), the virtual on-screen interactive moderator (3) being displayed on the display screen (2), and sending power on greetings;
c) receiving a voice command;
d) analyzing meaning of the voice command via a conversational logic parser (7);
e) matching a voice command database (82), for determining which corresponding operations to execute according to the voice command ;
f) accessing a user database (81), for inter-matching the voice command with history behaviors of the user (4);
g) generating a preferred response following the step f according to inter-matched results;
h) sending the preferred response to the user (4) through the virtual on-screen interactive moderator (3) via form of voices; and
i) executing the corresponding operations of the voice command on the television device (10).

7. The method for displaying a virtual on-screen interactive moderator of claim 6, wherein the virtual on-screen interactive moderator (3) is displayed on the display screen (2) in a viewable visual form, and in the step b, the television device (10) generates the power on greetings according to time and user data, and sends the power on greetings via form of voices by the virtual on-screen interactive moderator (3).

8. The method for displaying a virtual on-screen interactive moderator of claim 7 , wherein the virtual on-screen interactive moderator (3) is selected from the group consisting of a cartoon, a photograph, a picture, a hologram, an animal, a moving object and an animated character.

9. The method for displaying a virtual on-screen interactive moderator of claim 8, wherein the virtual on-screen interactive moderator (3) is displayed on the display screen (2) in terms of 2D or 3D factor.

10. The method for displaying a virtual on-screen interactive moderator of claim 6, wherein in the step h, the virtual on-screen interactive moderator (3) sends the preferred response via the form of voices, and simultaneously performs a visible corresponding action.

## Amended claims

### Amended claims in accordance with Rule 137(2) EPC.

**1.** A television device (10) connected to a display screen (2), the television device (10) comprising:
a processor (1), adapted to execute a conversational logic parser (7), and to generate power-on greetings based on time and user data of a user (4) upon the television device (10) being powered-on, before a voice command is received;
an input unit (5), electrically coupled with the processor (1), adapted to receive the voice command to transfer to the processor (1), wherein meaning of the voice command is analyzed by the conversational logic parser (7);
a display generate unit (6), electrically coupled with the processor (1), and controlled by the processor (1) adapted to generate a virtual on-screen interactive moderator (3);
a user database (81), connected to the processor (1), for providing user data of the user (4), wherein the user database (81) records history behaviors of the user (4) ;
a voice command database (82), connected to the processor (1), for providing corresponding operations to execute according to the received voice command; and
an output unit (9), electrically coupled with the processor (1), the television device (10) connected to the display screen (2) via the output unit (9) for displaying the virtual on-screen interactive moderator (3) on the display screen (2), wherein the virtual on-screen interactive moderator (3) is displayed in a viewable, visual form, and the virtual on-screen interactive moderator (3) is adapted to send the power-on greetings upon the television device (10) being powered on, before the voice command is received by the input unit (5);
wherein, upon the processor (1) analyzed the meaning of the voice command, the voice command and the voice command database (82) are matched for determining which corresponding operations to execute by the television device (10), and the user database (81) is accessed for inter-matching the voice command with history behaviors of the user (4) for excluding disliked or rejected options in the history according to the history behaviors of the user (4);
wherein, the processor (1) is further adapted to generate a preferred response according to inter-matched results to be sent by the virtual on-screen interactive moderator (3), wherein the virtual on-screen interactive moderator (3) is adapted to send the preferred response via form of voices and to simultaneously perform a visible corresponding action before the television device (10) is executing the operations corresponding to the voice command.

**2.** The television device of claim 1, wherein the virtual on-screen interactive moderator (3) is selected from the group consisting of a cartoon, a photograph, a picture, a hologram, an animal, a moving object and an animated character.

**3.** The television device of claim 2, wherein the virtual on-screen interactive moderator (3) is presented on the display screen (2) in terms of 2D or 3D.

**4.** The television device of claim 1, wherein the processor (1) comprises:
an audio converter (12), receiving the voice command from the input unit (5), and performing an analogue/digital converting operation on the voice command;
a central processing unit (11), electrically coupled with the audio converter (12), receiving and processing the converted voice command; and
a video processing unit (13), electrically coupled with the central processing unit (11), for processing video signals of the television device (10) and outputting via the output unit (9) to display on the display screen (2).

**5.** A method for displaying a virtual on-screen interactive moderator (3) on a television device (10), the television device (10) connected to a display screen (2), the method for displaying a virtual on-screen interactive moderator (3) comprising:
a) powering on the television device (10);
b) generating a virtual on-screen interactive moderator (3), the virtual on-screen interactive moderator (3) being displayed on the display screen (2) in a viewable visual form;
c)generating power-on greetings based on time and user data of a user (4) of the television device (10), and sending the power-on greetings through the virtual on-screen interactive moderator (3) via form of voices, before a voice command is received;
d) receiving the voice command;
e) analyzing meaning of the voice command via a conversational logic parser (7);
f) matching a voice command database (82), for determining which corresponding operations to execute according to the voice command ;
g) accessing a user database (81), for inter-matching the voice command with history behaviors of the user (4), for excluding disliked or rejected options in the history according to the history behaviors of the user (4) ;
h) generating a preferred response following the step g according to inter-matched results;
i) sending the preferred response for the user (4) to hear through the virtual on-screen interactive moderator (3) via form of voices, and simultaneously performs a visible corresponding action through the virtual on-screen interactive moderator (3); and
j) after step i, executing the corresponding operations of the voice command on the television device (10).

**6.** The method for displaying a virtual on-screen interactive moderator of claim 5 , wherein the virtual on-screen interactive moderator (3) is selected from the group consisting of a cartoon, a photograph, a picture, a hologram, an animal, a moving object and an animated character.

**7.** The method for displaying a virtual on-screen interactive moderator of claim 5, wherein the virtual on-screen interactive moderator (3) is displayed on the display screen (2) in terms of 2D or 3D.
